Europäisches Patentamt

(19) European Patent Office

Office européen des brevets

(11) Numéro de publication : **0 325 531 B1**

# (12) FASCICULE DE BREVET EUROPEEN

(45) Date de publication du fascicule du brevet :
**22.05.91 Bulletin 91/21**

(51) Int. Cl.⁵ : **E04H 17/12, A01G 17/14**

(21) Numéro de dépôt : **89400144.5**

(22) Date de dépôt : **18.01.89**

---

(54) **Piquet-support de fils tendus.**

(30) Priorité : **19.01.88 FR 8800571**

(43) Date de publication de la demande :
**26.07.89 Bulletin 89/30**

(45) Mention de la délivrance du brevet :
**22.05.91 Bulletin 91/21**

(84) Etats contractants désignés :
**AT BE CH DE ES FR GB GR IT LI LU NL**

(56) Documents cités :
**DE-U- 8 515 619**
**US-A- 1 495 379**

(73) Titulaire : **UGINE ACIERS DE CHATILLON ET GUEUGNON**
**La Défense 9, 4 Place de la Pyramide**
**F-92800 Puteaux (FR)**

(72) Inventeur : **Mermet, Jean-Claude**
**Mercully**
**F-71130 Gueugnon (FR)**
Inventeur : **Sotty, Daniel**
**4 Lotissement Le Robolin**
**Route de Chassy F-71130 Gueugnon (FR)**

(74) Mandataire : **Lanceplaine, Jean-Claude et al**
**CABINET LAVOIX 2, Place d'Estienne d'Orves**
**F-75441 Paris Cédex 09 (FR)**

## Description

La présente invention concerne les piquets, encore appelés pieux, ou palis, ou poteaux, destinés à supporter des fils tendus, le plus souvent métalliques, pouvant constituer des clôtures, des tuteurs d'arbres en espalier, des lignes de fils de palisse ou de fils releveurs pour la vigne, ainsi que bien d'autres usages, particulièrement agricoles.

Il existe une très grande variété de tels piquets, tous présentant des points d'accrochage, sous la forme d'orifices ou d'encoches. Certains font appel à des agrafes, ou à des clips, pour le guidage des fils. Ces agrafes constituent alors des pièces mobiles intermédiaires entre les piquets et les fils.

La plupart d'entre ces piquets sont d'un emploi simple et facile en terrain horizontal ou faiblement incliné, et pour des lignes de fils fixes. Par ailleurs, ils doivent être solides, économiques, et résister à la corrosion. Les piquets de types connus y parviennent plus ou moins bien.

Par contre, lorsque le terrain est accidenté, vallonné, et que les pentes des lignes de fils varient jusqu'à atteindre par endroits des valeurs importantes, les piquets de types connus ne conviennent pas toujours très bien.

De plus, dans le cas particulier de la vigne, il faut distinguer les "fils de palisse", situés à un niveau assez bas, des "fils releveurs", situés plus haut, et qui doivent suivre, par étapes, à des niveaux variables, la croissance des longues tiges hautes et feuillues de la vigne.

On connait dans le US-A-1 495 379 un piquet-support de fils tendus qui comporte deux faces planes formant un dièdre et plusieurs ouvertures disposées à cheval sur les deux faces planes.

Pour résoudre le cas particulier des piquets-supports de ces "fils releveurs" de la vigne, la demanderesse a précédemment déposé la demande FR-A-2 568 747, décrivant un poteau en deux parties, une partie inférieure fixe, et une partie supérieure mobile coulissant dans la précédente. Cette disposition convient bien pour les fils releveurs de la vigne en terrain plat ou faiblement vallonné. Elle est d'un emploi plus délicat en terrain vallonné, avec des pentes importantes. De plus, une partie coulissante est toujours d'un emploi moins facile qu'une pièce fixe.

Le but de la présente invention est de réaliser un piquet-support de fils tendus simple et robuste, sans partie coulissante et sans agrafe, assurant à la fois un montage aisé des fils et leur auto-blocage en position de service, quelle que soit la pente des lignes de fils à supporter et quelles que soient les variations de pente du terrain.

A cet effet, la présente invention a pour objet un piquet-support de fils tendus pour le montage et l'auto-blocage desdits fils en position de service, comportant au moins deux faces planes formant un dièdre et au moins une ouverture disposée à cheval sur les deux faces planes, caractérisé en ce qu'il présente sur la première face plane une partie allongée légèrement divergente depuis l'arête du dièdre et inclinée vers le bas, et qui se termine par un demi-cercle, tandis que sur la deuxième face plane l'ouverture présente une partie aux extrémités arrondies délimitée par deux arcs de cercle ayant un centre géométrique commun situé sur l'arête du dièdre, cette partie s'étendant depuis un niveau supérieur situé au-dessus du centre géométrique jusqu'à un niveau inférieur symétrique du précédent par rapport à un plan passant par ledit centre géométrique et par le centre du demi-cercle de la partie située sur la première face plane.

Selon une autre caractéristique de l'invention, le plan passant par le centre géométrique et par le centre du demi-cercle situé sur la première face plane forme avec un plan passant par ledit centre géométrique et perpendiculaire à l'arête du dièdre, un angle compris entre 0 et 30° et de préférence entre 20 et 25°.

La réalisation la plus simple de l'invention utilise une cornière usuelle unique, percée d'au moins d'une ouverture disposée à cheval sur les deux faces de la cornière et géométriquement conforme à la précédente description. Bien entendu, il est intéressant en pratique que la même cornière se trouve percée de telles ouvertures à intervalles réguliers répartis sur toute sa longueur, en vue de supporter plusieurs lignes de fils à diverses hauteurs.

Selon un autre mode de réalisation de l'invention, intéressant dans le cas de doubles lignes rapprochées de fils tendus à supporter, le piquet-support est formé de deux cornières parallèles, assemblées par tout moyen connu, par exemple par soudages par points des extrémités de leurs ailes, et comportant sur leurs arêtes et faces respectives des mêmes ouvertures que dans le cas d'une cornière unique, par exemple aux mêmes hauteurs pour les deux cornières.

Une réalisation préférentielle de l'invention consiste à faire appel à un profilé dont la section transversale affecte la forme d'un S, dont la partie supérieure et la partie inférieure du profil en S sont chacune constituées d'un dièdre percé d'au moins d'une desdites ouvertures, et de préférence de plusieurs. La partie centrale du profil en S comporte à la fois une partie centrale plane et pleine, dont l'axe longitudinal est aussi axe de symétrie du profilé, et deux parois planes symétriques par rapport à cet axe et perpendiculaires à la paroi centrale, qui servent à raccorder les deux dièdres latéraux, mentionnés ci-dessus, à ladite paroi centrale. Ces deux parois planes sont percées d'orifices circulaires destinés à faciliter la fixation des piquets d'extrémités de lignes de fils, ou toute autre fixation de renforcement des lignes de piquets.

Suivant une autre modalité particulière de la présente invention, le piquet-support est constitué d'une barre pleine, qui peut être ronde ou carrée, ou de toute autre section. Sur cette barre pleine, on usine au moins deux faces planes formant un dièdre, et l'on munit ce dièdre d'encoches conformes au profil des ouvertures décrites ci-dessus.

Selon une variante de la présente invention, le piquet-support est constitué par un profilé ayant une section transversale approximativement en forme de S, dont la partie inférieure et la partie supérieure sont chacune constituées d'un dièdre.

Les piquets-supports selon l'invention peuvent être exécutés dans tous matériaux convenables et sont spécialement intéressants s'ils sont métalliques, et plus particulièrement s'ils sont réalisés en acier inoxydable ou en acier galvanisé, en vue de présenter de bonnes résistances à la corrosion.

Afin de bien faire comprendre l'invention, on va décrire ci-après, à titre d'exemples non limitatifs, trois modes de réalisation de piquets selon l'invention.

La figure 1 est une vue cavalière d'une cornière simple munie d'ouvertures selon l'invention ;
la figure 2 est une vue cavalière de deux cornières parallèles soudées par leurs ailes et munies de ces ouvertures ;
la figure 3 est une vue cavalière d'un profilé à section transversale en S, muni de ces ouvertures ;
la figure 4 est une vue en coupe transversale du piquet en S de la figure 3, selon un plan A ;
la figure 5 est une mise à plat d'une ouverture, selon l'invention.

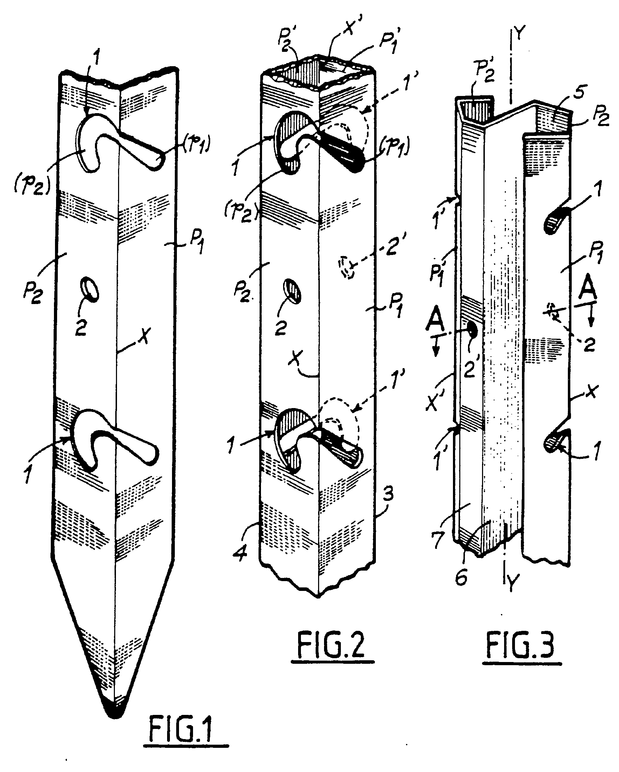

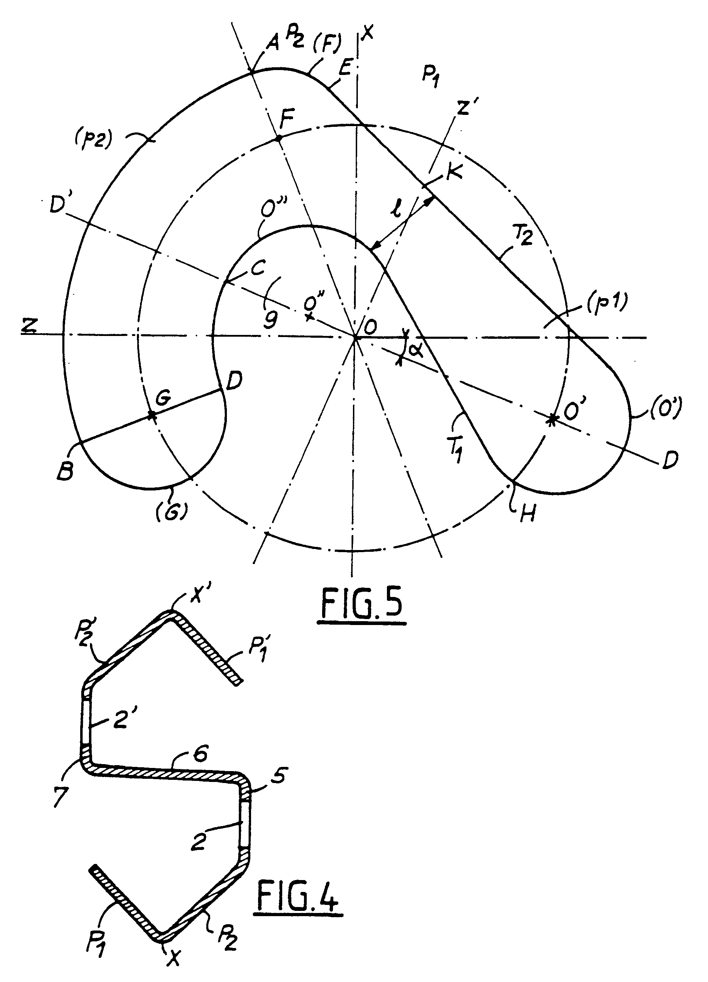

La cornière simple de la figure 1, d'arête X, arrondie, comporte deux faces planes P1 et P2 disposées à angle droit. Elle comporte plusieurs ouvertures 1, qui seront décrites en détail ci-après, en commentaire de la figure 5, et qui sont placées à intervalles réguliers sur la longueur de la cornière. A mi-distance de deux ouvertures 1 consécutives ont été percées des ouvertures circulaires 2, dans l'une ou l'autre des faces P1 et P2, servant à la fixation des piquets d'extrémités de lignes, ou à toute fixation de renforcement nécessaire en ligne.

La figure 2 présente deux cornières (P1, X, P2) et (P'1, X', P'2) soudées le long de leurs arêtes d'ailes 3 et 4 et comportant chacune des ouvertures respectivement 1 et 1', conformes à celles de la figure 1, et symétriques l'une de l'autre par rapport au plan des arêtes d'ailes 3 et 4. Cette symétrie est importante, car elle permet de faire guider par les ouvertures 1 et 1' de même niveaux deux lignes de fils parallèles, donc de même pente.

La figure 3 représente un piquet selon l'invention constitué par un profilé métallique dont la section transversale, en forme d'S, est visible en détail sur la figure 4.

Parcouru de haut en bas sur la figure 4, et de droite à gauche sur la figure 3, le profilé en forme d'S comprend successivement :
– Un premier dièdre (P1, X, P2), muni d'ouvertures 1 selon l'invention, disposées à intervalles réguliers sur sa hauteur. L'angle de ce dièdre est de 90°.
– Une paroi plane 5, percée d'orifices circulaires 2 utiles pour la fixation des piquets d'extrémités de lignes.
– Une paroi centrale 6, plane et pleine, dont l'axe longitudinal Y est axe de symétrie pour ledit profilé.
– Une autre paroi plane intermédiaire 7, percée d'orifices circulaires 2', et symétrique de la paroi 5 par rapport à l'axe Y.
– Un deuxième dièdre de 90° (P'1, X', P'2), symétrique du premier par rapport à Y, muni d'ouvertures 1' selon l'invention, disposées à intervalles réguliers sur sa hauteur. Il faut remarquer que les ouvertures 1' du deuxième dièdre sont symétriques des ouvertures 1 du premier dièdre par rapport à la paroi centrale 6, et non pas par rapport à l'axe Y. C'est la condition pour que le même piquet puisse supporter des paires de lignes de fils parallèles, donc de même pente.

Toutes les arêtes du profilé en S sont légèrement arrondies.

La mise à plat d'une ouverture à cheval, sur un dièdre, selon l'invention, telle que 1 ou 1', est visible sur la figure 5.

L'exemple d'ouverture selon l'invention, qui va être maintenant décrite, en se reportant à la figure 5, est valable pour un fil tendu 8 de 1 à 4 mm environ de diamètre et de préférence compris entre 1,2 mm et 3 mm, avec une tolérance de ± 0,2 mm.

Soit O un point quelconque de l'arête X du dièdre de 90° (P1, X, P2) et soit un axe Z perpendiculaire à l'arête X et passant par ce point O. Soit OD et OD' les demi-droites issues de O et inclinées par rapport à l'axe Z d'un angle $\alpha$ compris entre 0 et 30° et de préférence entre 20 et 25°. Les demi-droites OD et OD' sont situées respectivement dans P1 et P2.

Soit O', un point de OD situé à 7,2 millimètres de O et O'', un point de OD' situé à 1,7 millimètres de O. Du point O' comme centre, on trace dans le plan P1 un peu plus d'un demi-cercle (O') de rayon compris entre 0,8 fois et 2,1 fois le diamètre du fil 8 tendu et de préférence égal à 2,5 millimètres, et du point O'' comme centre, on trace dans le plan P2 un peu moins d'un demi-cercle (O''), de rayon de préférence égal à 3 millimètres. Puis on mène la tangente T1 commune aux deux cercles (O') et (O'').

Le long d'un axe Z' perpendiculaire aux demi-droites OD et OD' selon une direction à peine inclinée sur Z', et qui peut même être confondue avec elle, on mène à partir du point O, une longueur égale à 5,6 millimètres et on obtient ainsi un point K.

Par le point K ainsi obtenu, on mène sur P1 une tangente T2 au cercle (O'), et on prolonge T2 sur le demi-plan P2. A ce stade, la demi-ouverture (p1) dans le demi-plan P1 est complètement tracée. Elle est comprise entre T1, (O') et T2. Cette demi-ouverture a une forme légèrement divergente à partir de Z', et se termine par l'arrondi (O').

Cette demi-ouverture (p1) a une largeur minimum "l" comprise entre 1 fois et 3 fois le diamètre du fil tendu à supporter et de préférence comprise entre 1,05 fois et 2,5 fois le diamètre dudit fil. Cette largeur constitue la plus faible largeur de l'ensemble de l'ouverture, dont le rôle de blocage du fil va être important, à l'encontre des déplacements de ce dernier vers le haut.

Il reste donc à tracer la demi-ouverture (p2) dans le demi-plan P2. Pour cela, à partir du point O comme centre, on trace un arc de cercle AB de centre O, de rayon égal à 9,7 millimètres, A et B étant symétriques par rapport à la demi-droite OD' et étant situés chacun à une distance de ladite demi-droite OD' comprise entre 2 et 7 fois le diamètre du fil tendu et de préférence égale à 7 mm, et l'on trace un deuxième arc de cercle CD de centre O et de rayon égal à 4,7 millimètres, qui se raccorde en C à l'arc de cercle (O'').

Pour terminer la demi-ouverture (p2), il suffit maintenant de tracer d'abord un arrondi supérieur tangent en A à l'arc AB, et en E à la droite T2.

C'est un arc de cercle (F) de centre F et de rayon égal à 2,5 millimètres. Puis l'on termine en traçant l'arrondi inférieur constitué par un demi-cercle (G), de centre G, et de rayon égal à 2,5 millimètres, qui est tangent en D à l'arc CD et tangent en B à l'arc AB. Les trois points O', F et G, centres respectifs de trois arrondis, sont sur un cercle de centre O et de rayon égal à 7,2 millimètres. La demi-ouverture (p2) est essentiellement constituée par la bande en arc de cercle limitée par (O''), l'arc CD, l'arrondi DB, l'arc AB, l'arrondi AE et une partie de la droite T2. Cette bande (p2) de centre O a pour largeur 5 millimètres et pour rayon moyen 7,2 millimètres (cercle des points O', F et G).

La demi-ouverture (p1) de l'ouverture située sur la face plane (P1) est inclinée selon une direction formant avec l'arête X du dièdre (P1, X, P2) un angle compris entre 40° et 80° et a une longueur compris entre 4 fois et 11 fois le diamètre du fil tendu.

Ainsi, en service, le fil tendu 8 repose sur le fond H de l'arrondi (O') de la demi-ouverture (p1), passe derrière l'ergot 9 que constitue l'arrondi (O'') et ressort en traversant la demi-ouverture (p2) quelque part dans la bande en arc de cercle, plus ou moins bas suivant sa pente.

Les piquets-supports selon l'invention sont donc auto-bloquants, quelle que soit la pente du fil 8 tendu, et quels que soient les mouvements naturels qu'il peut subir fortuitement. En effet, le fil 8 tendu traverse le plan P1 du piquet en se plaçant au fond de l'extrémité arrondie de la demi-ouverture (p1), sur lequel il repose, et il traverse le plan P2 en une position située quelque part sur la bande en arc de cercle de la demi-ouverture (p2) et qui est variable suivant la pente de fil tendu. Il ne repose sur le fond arrondi de cette bande que dans le cas extrême d'une pente maximale du fil, qui est en moyenne de 30° sur l'horizontal, et peut atteindre des valeurs plus importantes pour des ouvertures selon l'invention conçues en conséquence.

Il en résulte que tous les mouvements du fil sont bloqués, moyennant parfois un certain jeu, de la manière suivante.

Les mouvements vers le bas du brin amont du fil sont impossibles, puisque le fil 8 repose sur le fond de la demi-ouverture (p1). Les mouvements vers le bas du brin aval du fil ne sont possible qu'entre la position habituelle et la position inférieure dans la bande en arc de cercle de la demi-ouverture (p2), cette position inférieure assurant un blocage vers le bas.

Les mouvements latéraux du fil, avec un petit jeu, sont bloqués par l'ergot 9 disposé selon l'arête X du dièdre (P1, X, P2) et séparant les deux demi-ouvertures (p1) et (p2).

Enfin, les mouvements du fil 8 vers le haut, avec un petit jeu, se trouvent bloqués par l'arête X du dièdre (P1, X, P2) lorsque le fil tendu, parcourant la bande en arc de cercle de la demi-ouverture (p2) vient buter contre l'arrondi supérieur de cette bande. Ce mouvement vers le haut ne permet de sortir le fil de l'ouverture que s'il est suivi d'un mouvement horizontal au niveau de l'ouverture dans l'arête X. En l'absence de tout mouvement horizontal de ce genre, le fil, sollicité vers le haut, reste bloqué par l'arête X.

Un autre avantage spécifique des piquets selon l'invention réside dans le fait que jusqu'à une certaine pente maximale, un même type de piquet, avec un même type d'ouverture, peut être utilisé pour une ligne de fil, ou pour des lignes de fils, dont la pente varie autour d'une valeur moyenne de 30°, mais pouvant être choisie à volonté lors de la conception et de la fabrication des piquets.

Dans le cas particulier des supports des "fils releveurs" de la vigne, situés à une bonne hauteur au-dessus du sol, les piquets selon l'invention fournissent une solution, puisqu'ils peuvent être de la hauteur voulue et comporter chacun plusieurs ouvertures réparties sur cette hauteur, tant pour les "fils de palisse", vers le bas, que pour plusieurs niveaux de "fils releveurs", vers le haut. Toutefois, si des piquets trop hauts se révèlent gênants pour le taillage de la vigne, il est possible d'utiliser des piquets fixe de hauteur moyenne, et d'y associer des tiges coulissantes. Les piquets dont le profil est en cornière ou encore en S, se prêtent bien à une adaptation de tiges coulissantes, au besoin munies d'ouvertures selon la présente invention.

Les piquets-supports selon l'invention peuvent être obtenus à partir d'un feuillard sur lequel sont directement poinçonnées les ouvertures à la forme désirée et qui est ensuite découpé et plié.

Le piquet-support peut également être constitué d'une barre pleine de section ronde ou carrée, ou de toute autre section. Sur cette barre pleine, on usine au moins deux faces planes formant un dièdre, et l'on munit ce dièdre d'encoches conformes au profil des ouvertures désirées.

Selon une variante, le piquet-support notamment de fils de vigne peut également être constitué par un profilé ayant une section transversale approximativement en forme de S, tel que décrit précédemment, mais comportant sur les deux parois planes (5, 7) des dièdres latéraux (P1, X, P2) et (P'1, X', P'2) uniquement des orifices circulaires (2, 2').

Les piquets-supports peuvent être réalisés soit en acier galvanisé, par exemple au trempé, soit de préférence en acier inoxydable.

L'invention est applicable au soutien de fils de clôture, de fils tuteurs d'arbres en espaliers, de fils de palisse ou de fils releveurs pour la vigne, et à de multiples autres cas.

## Revendications

1. Piquet-support de fils (8) tendus pour le montage et l'auto-blocage desdits fils en position de service, quelle que soit la pente des lignes de fils à supporter, comportant au moins deux faces planes (P1, P2) et (P'1, P'2) formant un dièdre (P1, X, P2) et (P'1, X', P'2) et au moins une ouverture (1, 1') disposée à cheval sur les deux faces planes (P1, P2) et (P'1, P'2), caractérisé en ce qu'il présente sur la première face plane (P1 et P'1) une partie allongée (p1) de l'ouverture (1, 1') légèrement divergente depuis l'arête X et X' du dièdre et inclinée vers le bas, et qui se termine par un demi-cercle (O'), tandis que sur la deuxième face plane (P2 et P'2) l'ouverture présente une partie (p2) aux extrémités arrondies délimitée par deux arcs de cercle ayant un centre géométrique O situé sur l'arête X et X' du dièdre (P1, X, P2) et (P'1, X', P'2), cette partie (p2) s'étendant depuis un niveau supérieur situé au-dessus du centre géométrique O jusqu'à un niveau inférieur symétrique du précédent par rapport à un plan (D) passant par ledit centre géométrique et par le centre O' du demi-cercle (O').

2. Piquet-support selon la revendication 1, caractérisé en ce que le plan (D) passant par le centre géométrique O et par le centre O' du cercle (O') forme avec un plan (Z) perpendiculaire en O à l'arête X et X' du dièdre (P1, X, P2) et (P'1, X', P'2) un angle α compris entre 0 et 30° et de préférence entre 20 et 25°.

3. Piquet-support selon la revendication 1, caractérisé en ce que l'ouverture (1) et (1') a une largeur minimale comprise entre 1 fois et 3 fois le diamètre du fil (8) tendu à supporter et de préférence comprise entre 1,05 fois et 2,5 fois le diamètre dudit fil.

4. Piquet-support selon l'une quelconque des revendications 1 à 3, caractérisé en ce que ladite largeur minimale est située sur la face plane (P1) et (P'1) du dièdre (P1, X, P2) et (P'1, X', P'2) et sensiblement au niveau d'un plan (Z') passant par le centre géométrique O et perpendiculaire au plan (D).

5. Piquet-support selon l'une quelconque des revendications 1 à 4, caractérisé en ce que la partie (p1) de l'ouverture située sur la face plane (P1) est inclinée selon une direction formant avec l'arête X du dièdre (P1, X, P2) un angle compris entre 40° et 80° et a une longueur comprise entre 4 fois et 11 fois le diamètre du fil tendu.

6. Piquet-support selon la revendication 1, caractérisé en ce que le demi-cercle (O') a un rayon compris entre 0,8 fois et 2,1 fois le diamètre du fil tendu.

7. Piquet-support selon la revendication 1, caractérisé en ce que les extrémités arrondies de la partie (p2) de l'ouverture (1) et (1') situées sur la face plane (P2) ont une largeur constante comprise entre 0,8 et 2,1 fois le diamètre du fil (8) tendu et ont une hauteur de part et d'autre du plan de symétrie (D) comprise entre 2 et 7 fois le diamètre dudit fil tendu.

8. Piquet-support selon l'une quelconque des revendications 1 à 7, caractérisé en ce que l'angle du dièdre (P1, X, P2) est compris entre 60 et 110° et de préférence entre 85° et 95°.

9. Piquet-support selon l'une quelconque des revendications 1 à 8, caractérisé en ce qu'il est constitué d'une cornière unique percée d'au moins une desdites ouvertures (1) et (1').

10. Piquet-support selon l'une quelconque des revendications 1 à 8, permettant la pose de doubles lignes de fils (8) tendus, caractérisé en ce qu'il est constitué par un assemblage de deux cornières parallèles, dont deux dièdres (P1, X, P2) et (P'1, X', P'2) sont percés chacun d'au moins une desdites ouvertures (1) et (1'), dans un sens tel que chacun des fils (8) d'une ligne double puisse suivre la même pente que l'autre.

11. Piquet-support selon l'une quelconque des revendications 1 à 8, permettant la pose de doubles lignes de fils (8) tendus, caractérisé en ce qu'il est constitué par un profilé dont la section transversale affecte approximativement la forme d'un S, dont la partie inférieure et la partie supérieure sont chacune constituées d'un dièdre (P1, X, P2) et (P'1, X', P'2) percé d'au moins une desdites ouvertures (1) et (1').

12. Piquet-support selon la revendication 11, comportant une paroi centrale plane et pleine (6), dont l'axe longitudinal Y est aussi axe de symétrie dudit piquet-support, caractérisé en ce que la partie centrale de l'S comporte deux parois planes (5, 7) perpendiculaires à la paroi centrale (6) de l'S, et symétriques par rapport à l'axe Y, servant à raccorder les deux dièdres latéraux (P1, X, P2) et (P'1, X', P'2) à ladite paroi centrale (6) et en ce que ces deux parois planes (5, 7) sont percées d'orifices circulaires (2, 2') destinés à faciliter la fixation des piquets d'extrémités de lignes, ou toute autre fixation de renforcement des lignes de piquets.

13. Piquet-support selon l'une quelconque des revendications 1 à 8, caractérisé en ce qu'il est constitué d'une barre pleine comportant au moins deux faces planes formant un dièdre (P1, X, P2) et (P'1, X', P'2) munies d'au moins une encoche conforme auxdites ouvertures (1) et (1').

14. Piquet-support selon l'une quelconque des revendications 1 à 8, caractérisé en ce qu'il est constitué d'une barre carrée ou polygonale brute de laminage munie d'au moins une encoche conforme auxdites ouvertures (1) et (1').

15. Piquet-support selon l'une quelconque des revendications 1 à 14, caractérisé en ce qu'il est exécuté en acier inoxydable.

16. Piquet-support selon l'une quelconque des revendications 1 à 14, caractérisé en ce qu'il est exécuté en acier galvanisé.

17. Piquet-support selon la revendication 1, caractérisé en ce qu'il est constitué par un profilé dont la section transversale a approximativement la forme d'un S, dont la partie inférieure et la partie supérieure de la section du profilé sont chacune constituées d'un dièdre (P1, X, P2) et (P'1, X', P'2).

18. Piquet-support selon la revendication 17 comportant une paroi centrale plane et pleine (6), caractérisé en ce que la partie centrale de l'S comporte deux parois planes (5, 7) perpendiculaires à la paroi centrale (6) de l'S, servant à raccorder les deux dièdres latéraux (P1, X, P2) et (P'1, X', P'2) à ladite paroi centrale (6) et en ce que ces deux parois planes (5, 7) sont percées d'orifices circulaires (2, 2').

**Ansprüche**

1. Trägerpfahl für Spannfäden (8) zur Montage und Selbstsicherung der Fäden in Arbeitsstellung unabhängig von der Neigung der zu haltenden Fadenzeilen, mit wenigstens zwei planen Flächen (P1, P2) und (P'1, P'2), welche einen Dieder (P1, X, P2) und (P'1, X', P'2) bilden, und wenigstens einer Öffnung (1, 1'), welche die beiden planen Flächen (P1, P2) und (P'1, P'2) übergreifend auf diesen angeordnet sind, dadurch gekennzeichnet, daß er auf der ersten planen Fläche (P1 und P'1) einen langgestreckten Teil (p1) der Öffnung (1, 1') aufweist, welcher von der Kante X und X' des Dieders leicht divergiert und nach unten geneigt ist und welcher in einem Halbkreis (O') endet, während auf der zweiten planen Fläche (P2 und P'2) die Öffnung einen Teil (p2) aufweist, der an den runden Rändern durch zwei Kreisbögen bestimmt ist, die eine geometrische Mitte O haben, welche auf der Kante X, X' des Dieders (P1, X, P2) und (P'1, X', P'2) liegt, wobei sich dieser Teil (p2) von einem höheren Niveau, welches über der geometrischen Mitte O liegt, bis zu einem tieferen Niveau erstreckt, welches zum vorgenannten bezüglich einer durch die geometrische Mitte und durch die Mitte O' des Halbkreises (O') verlaufenden Ebene (D) symmetrisch ist.

2. Trägerpfahl nach Anspruch 1, dadurch gekennzeichnet, daß die durch die geometrische Mitte O und durch die Mitte O' des Kreises (O') verlaufende Ebene (D) mit einer in O zur Kante X und X' des Dieders (P1, X, P2) und (P'1, X', P'2) senkrechten Ebene einen Winkel $\alpha$ zwischen 0 und 30° und vorzugsweise zwischen 20 und 25° einschließt.

3. Trägerpfahl nach Anspruch 1, dadurch gekennzeichnet, daß die Öffnung (1) und (1') eine Minimalbreite zwischen dem 1- und 3-fachen des Durchmessers des zu haltenden Spannfadens (8) und vorzugsweise zwischen dem 1,05-fachen und dem 2,5-fachen des Durchmessers des Fadens hat.

4. Trägerpfahl nach irgendeinem der Ansprüche 1 bis 3, dadurch gekennzeichnet, daß die Minimalbreite auf der planen Fläche (P1) und (P'1) des Dieders (P1, X, P2) und (P'1, X', P'2) und im wesentlichen auf Höhe einer durch die geometrische Mitte O und senkrecht zur Ebene (D) verlaufenden Ebene (Z') liegt.

5. Trägerpfahl nach irgendeinem der Ansprüche 1 bis 4, dadurch gekennzeichnet, daß der auf der planen Fläche (P1) liegende Teil (p1) der Öffnung in einer Richtung geneigt ist, welche mit der Kante X des Dieders (P1, X, P2) einen Winkel zwischen 40° und 80° einschließt, und eine zwischen dem 4-fachen und dem 11-fachen des Durchmessers des Spannfadens liegende Länge hat.

6. Trägerpfahl nach Anspruch 1, dadurch gekennzeichnet, daß der Halbkreis (O') einen Radius zwischen dem 0,8-fachen und dem 2,1-fachen des Durchmessers des Spannfadens hat.

7. Trägerpfahl nach Anspruch 1, dadurch gekennzeichnet, daß die auf der planen Fläche (P2) liegenden runden Ränder des Teils (p2) der Öffnung (1) und (1') eine konstante Weite zwischen dem 0,8- und 2,1-fachen des Durchmessers des Spannfadens (8) und eine Hohe beiderseits der Symmetrieebene (D) zwischen dem 2- und 7-fachen des Durchmessers des Spannfadens haben.

8. Trägerpfahl nach irgendeinem der Ansprüche 1 bis 7, dadurch gekennzeichnet, daß der Winkel des Dieders (P1, X, P2) zwischen 60 und 110° und vorzugsweise zwischen 85 und 95° liegt.

9. Trägerpfahl nach irgendeinem der Ansprüche 1 bis 8, dadurch gekennzeichnet, daß er durch ein einziges Winkelprofil gebildet ist, welches von wenigstens einer der Öffnungen (1) und (1') durchsetzt ist.

10. Trägerpfahl nach irgendeinem der Ansprüche 1 bis 8, welcher das Verlegen von Doppelzeilen von Spannfäden (8) gestattet, dadurch gekennzeichnet, daß er durch eine Zusammenfügung von zwei parallelen Winkelprofilen gebildet ist, deren zwei Dieder (P1, X, P2) und (P'1, X', P'2) jeweils von wenigstens einer der Öffnungen (1) und (1') durchsetzt sind, in einem solchen Sinne, daß jeder der Fäden (8) einer Doppelzeile der gleichen Neigung folgen kann wie der andere.

11. Trägerpfahl nach irgendeinem der Ansprüche 1 bis 8, welcher das Verlegen von Doppelzeilen von Spannfäden (8) gestattet, dadurch gekennzeichnet, daß er durch ein Profil gebildet ist, dessen Querschnitt ungefähr die Form eines S annimmt, dessen unterer Teil und oberer Teil jeweils durch einen von wenigstens einer der Öffnungen (1) und (1') durchsetzten Dieder (P1, X, P2) und (P'1, X', P'2) gebildet ist.

12. Trägerpfahl nach Anspruch 11 mit einer planen und vollen Mittelwand (6), deren Längsachse Y auch Symmetrieachse des Trägerpfahls ist, dadurch gekennzeichnet, daß der Mittelteil des S zwei zur Mittelwand (6) des S senkrechte und in Bezug auf die Achse Y symmetrische plane Wände (5, 7) aufweist, die als Verbindung der beiden seitlichen Dieder (P1, X, P2) und (P'1, X', P'2) mit der Mittelwand (6) dienen, und daß die beiden planen Wände (5, 7) von kreisförmigen Öffnungen (2, 2') zur Erleichterung der Befestigung der Endpfähle der Zeilen oder jeder anderen Verstärkungsbefestigung der Pfahlzeilen durchsetzt sind.

13. Trägerpfahl nach irgendeinem der Ansprüche 1 bis 8, dadurch gekennzeichnet, daß er durch eine Vollstange gebildet ist, welche wenigstens zwei einen Dieder (P1, X, P2) und (P'1, X', P'2) bildende plane Flächen aufweist, die mit wenigstens einer Kerbe in Übereinstimmung mit den Öffnungen (1) und (1') versehen sind.

14. Trägerpfahl nach irgendeinem der Ansprüche I bis 8, dadurch gekennzeichnet, daß er durch einen viereckigen oder polygonalen Rohwalzstab gebildet ist, welcher mit wenigstens einer Kerbe in Übereinstimmung mit den Öffnungen (1) und (1') versehen ist.

15. Trägerpfahl nach irgendeinem der Ansprüche 1 bis 14, dadurch gekennzeichnet, daß er aus rostfreiem Stahl ausgeführt ist.

16. Trägerpfahl nach irgendeinem der Ansprüche 1 bis 14, dadurch gekennzeichnet, daß er aus verzinktem Stahl ausgeführt ist.

17. Trägerpfahl nach Anspruch 1, dadurch gekennzeichnet, daß er durch ein Profil gebildet ist, dessen Querschnitt ungefähr die Form eines S hat, dessen unterer Teil und oberer Teil des Profilquerschnitts jeweils durch einen Dieder (P1, X, P2) und (P'1, X', P'2) gebildet ist.

18. Trägerpfahl nach Anspruch 17 mit einer planen und vollen Mittelwand (6), dadurch gekennzeichnet, daß der Mittelteil des S zwei zur Mittelwand (6) des S senkrechte plane Wände (5, 7) aufweist, die als Verbindung der beiden seitlichen Dieder (P1, X, P2) und (P'1, X', P'2) mit der Mittelwand (6) dienen, und daß die beiden planen Wände (5, 7) von kreisförmigen Öffnungen (2, 2') durchsetzt sind.

## Claims

1. A support post for stretched wires (8), adapted to the installation and self-locking of the wires in their position of use, whatever the inclination of the wires to be supported may be, comprising at least two faces (P1, P2) and (P'1, P'2) forming a dihedron (P1, X, P2) and (P'1, X', P'2) and at least one opening (1, 1') straddling the two faces (P1, P2) and (P'1, P'2), characterized in that has on the first face (P1 and P'1) an elongated portion (p1) of the opening (1, 1') which diverges slightly from the edge X and X' of the dihedron and is downwardly inclined and terminates in a semicircle (O'), while on the second face (P2 and P'2) the opening has a portion (p2) which has rounded edges and is bounded by two arcs of a circle having a geometric centre O situated on the edge X and X' of the dihedron (P1, X, P2) and P'1, X', P'2), said portion (p2) extending from an upper level situated above the geometric centre O to a lower level symmetrical with the upper level in relation to a plane (D) passing through said geometric centre and the centre O' of the semicircle (O').

2. A support post according to claim 1, characterized in that the plane (D) passing through the geometric centre O and the centre O' of the semicircle (O') forms with a plane (Z) perpendicular at O to the edge X and X' of the dihedron (P1, X, P2) and (P'1, X', P'2) an angle α of between 0° and 30° and preferably between 20° and 25°.

3. A support post according to claim 1, characterized in that the opening (1) and (1') has a minimum width of between once and three times the diameter of the stretched wire (8) to be supported, and preferably of between 1.05 and 2.5 times the diameter of said wire.

4. A support post according to any of claims 1 to 3, characterized in that said minimum width is situated on the face (P1) and (P'1) of the dihedron (P1, X, P2) and (P'1, X', P'2) and substantially at the level of a plane (Z') passing through the geometric centre O and perpendicular to the plane (D).

5. A support post according to any of claims 1 to 4, characterized in that the portion (p1) of the opening situated on the face (P1) is inclined in a direction forming with the edge X of the dihedron (P1, X, P2) an angle of between 40 and 80 and has a length of between four times and eleven times the diameter of the stretched wire.

6. A support post according to claim 1, characterized in that the semicircle (O') has a radius of between 0.8 and 2.1 times the diameter of the stretched wire.

7. A support post according to claim 1, characterized in that the rounded ends of the portion (p2) of the opening (1) and (1') which are situated on the face (P2) have a constant width of between 0.8 and 2.1 times the diameter of the stretched wire (8) and a height on either side of the plane of symmetry (D) of between twice and seven times the diameter of said stretched wire.

8. A support post according to any of claims 1 to 7, characterized in that the angle of the dihedron (P1, X, P2) is between 60° and 110° and preferably between 85° and 95°.

9. A support post according to any of claims 1 to 8, characterized in that it is formed by a single angle iron pierced with at least one of said openings (1) and (1').

10. A support post according to any of claims 1 to 8, allowing the installation of double lines of stretched wires (8), characterized in that it is formed by an assembly of two parallel angle irons, of which two dihedrons (P1, X, P2) and (P'1, X', P'2) are each pierced with at least one of said openings (1) and (1') in a direction such that each of the wires (8) of a double line can follow the same inclination as the other.

11. A support post according to any of claims 1 to 8, allowing the installation of double stretched wires (8), characterized in that it is formed by a sectional member whose cross-section has substantially the shape of an S whose lower and upper portions are each formed by a dihedron (P1, X, P2) and (P'1, X', P'2) pierced with at least one of said openings (1) and (1').

12. A support post according to claim 11, comprising a central flat solid wall (6) whose longitudinal axis Y is also the axis of symmetry of said support post, characterized in that the central portion of the 5 comprises two flat walls (5, 7) which are perpendicular to the central wall (6) of the S and symmetrical in relation to the axis Y and which connect the two lateral dihedrons (P1, X, P2) and (P'1, X', P'2) to said central wall (6), and said two flat walls (5, 7) are pierced with circular orifices (2, 2') adapted to facilitate the attachment of the line end posts, or any other reinforcing attachment to the line of posts.

13. A support post according to any of claims 1 to 8, characterized in that it is formed by a solid bar comprising at least two faces which form a dihedron (P1, X, P2) and (P'1, X', P'2) and have at least one notch matching said openings (1) and (1').

14. A support post according to any of claims 1 to 8, characterized in that it is formed by an as-rolled square or polygonal bar having at least one notch matching said openings (1) and (1').

15. A support post according to any of claims 1 to 14, characterized in that it is made of stainless steel.

16. A support post according to any of claims 1 to 14, characterized in that it is made of galvanized steel.

17. A support post according to claim 1, characterized in that it is formed by a sectional member whose cross-section has substantially the shape of an S, the upper and lower portions of the section of said sectional member each being formed by a dihedron (P1, X, P2) and (P'1, X', P'2).

18. A support post according to claim 17, comprising a central flat wall (6), characterized in that the central portion of the S comprises two flat walls (5, 7) which are perpendicular to the central wall (6) of the S and connect the two lateral dihedrons (P1, X, P2) and (P'1, X', P'2) to said central wall (6), and said two flat walls (5, 7) are pierced with circular orifices (2, 2').

FIG.1

FIG.2

FIG.3

FIG.5

FIG.4